Europäisches Patentamt

European Patent Office

Office européen des brevets

(19)

(11) **EP 1 194 999 B1**

(12) **FASCICULE DE BREVET EUROPEEN**

(45) Date de publication et mention
de la délivrance du brevet:
**13.10.2004  Bulletin 2004/42**

(51) Int Cl.⁷: **H02P 8/08**, G01P 3/46,
G08C 19/20

(21) Numéro de dépôt: **00949538.3**

(22) Date de dépôt: **14.06.2000**

(86) Numéro de dépôt international:
**PCT/FR2000/001645**

(87) Numéro de publication internationale:
**WO 2001/001558 (04.01.2001 Gazette 2001/01)**

(54) **METHODE DE CALAGE D'UN MOTEUR ELECTRIQUE DE TYPE POLYPHASE A FONCTIONNEMENT PAS A PAS**

VERFAHREN ZUR FESTSTELLUNG EINES ELEKTRISCHEN MEHRPHASENSCHRITTMOTORS

METHOD FOR SETTING A POLYPHASE ELECTRIC STEPPER MOTOR

(84) Etats contractants désignés:
**AT BE CH CY DE DK ES FI FR GB GR IE IT LI LU
MC NL PT SE**

(30) Priorité: **29.06.1999  FR 9908436
27.07.1999  FR 9909828**

(43) Date de publication de la demande:
**10.04.2002  Bulletin 2002/15**

(73) Titulaire: **Société Industrielle de Sonceboz S.A.
2605 Sonceboz (CH)**

(72) Inventeurs:
  • **CATELLANI, Didier
    CH-2900 Porrentruy (CH)**
  • **PRUDHAM, Daniel
    F-25220 Thise (FR)**

(74) Mandataire: **Rhein, Alain
    c/o Cabinet Bleger-Rhein,
    8, Avenue Pierre Mendès France
    67300 Schiltigheim (FR)**

(56) Documents cités:
    **EP-A- 0 833 438          DE-A- 4 200 551**

**Description**

L'invention a trait à une méthode de calage d'un moteur électrique par rapport à une position de référence correspondant à une butée mécanique répercutée au travers d'un réducteur, audit moteur électrique de type polyphasé à alimentation séquentielle pour un fonctionnement pas à pas.

La particularité du moteur pas à pas est d'assurer un mouvement mécanique incrémental continu. De ce fait, ils sont souvent utilisés dans des systèmes de mesure pour réaliser des fonctions d'affichage. Comme application typique, on notera l'entraînement d'aiguilles d'instruments de mesure ou d'indicateurs, tels que des instruments de tableau de bord d'automobile ou l'entraînement de volets pour le réglage du débit d'air d'un circuit de climatisation.

Dans un moteur pas à pas, à chaque impulsion de l'alimentation, correspond une rotation élémentaire constante d'un pas. Un nombre déterminé d'impulsions entraîne un nombre correspondant de pas et, donc, une rotation connue du rotor. La succession d'impulsions à une fréquence déterminée permet d'imposer une vitesse de rotation pratiquement constante.

En fait, le moteur pas à pas est souvent associé à un système d'engrenage qui sert de réducteur pour diminuer mécaniquement l'amplitude du pas angulaire au niveau de la charge, par exemple d'une aiguille. La résolution est ainsi augmentée.

Dans un système d'affichage, avec une résolution suffisamment bonne, on ne perçoit pas le caractère incrémental de la rotation du moteur, donnant l'impression d'un mouvement continu au niveau de l'aiguille.

Les documents FR-95.15436 et FR-96.12765 ou encore le document EP-A-587.685 décrivent, d'ores et déjà, de tels moteurs pas à pas rotatifs polyphasés, notamment destinés pour l'entraînement d'une aiguille d'un afficheur.

A ce propos, l'on comprend bien que dans ce domaine d'application, il est important d'avoir une bonne correspondance entre la position de l'aiguille et la graduation de l'échelle devant laquelle elle est amenée à évoluer. L'une des difficultés rencontrées lors de la mise en marche de ce type d'appareil est la mise en place de l'aiguille par rapport à une position de référence, en particulier si l'on ne dispose pas d'indication sur la position initiale de l'aiguille ou encore s'il s'est produit un décalage suite à une défaillance pendant la phase d'arrêt ayant conduit à une perte d'information. Il faut alors procéder à une réinitialisation du système, afin de faire repartir l'aiguille depuis une position connue.

Il est donc nécessaire de fixer une position de référence susceptible de définir l'origine angulaire du rotor de sorte qu'en comptant le nombre de pas réalisés, en partant de la position de référence, donc le nombre d'impulsions appliquées au moteur, il est possible de connaître la position angulaire du rotor relativement à cette référence. Bien évidemment, connaissant les caractéristiques du réducteur, l'on peut en déduire la position de l'aiguille entraînée, voire d'un volet, ceci au jeu près de l'engrenage.

Dans la mesure où, dans un grand nombre d'applications d'afficheur à aiguille, celle-ci est amenée à tourner sur une course inférieure à 360° voire même inférieure à 300°, la position de référence peut être définie par une butée mécanique placée, soit au niveau du cadran devant laquelle évolue ladite aiguille, soit encore au niveau du système d'engrenage de manière à limiter la course angulaire des pignons composants ce dernier. S'agissant d'un réducteur, une telle butée mécanique interne est placée, habituellement, sur la roue de sortie, à savoir celle dont l'axe entraîne la charge, donc l'aiguille.

En conséquence, pour procéder à cette initialisation du système, l'on vient commander l'alimentation du moteur de sorte que son rotor commande la rotation de la charge en direction de la butée mécanique. Une fois celle-ci détectée et connaissant l'angle qui sépare cette butée mécanique de la valeur zéro du cadran, l'on applique le nombre de pas nécessaires, afin d'amener l'aiguille à cette valeur zéro. De la même manière en cours de fonctionnement du système d'affichage, il est possible de communiquer au moteur les séquences ou impulsions d'alimentation engendrant un nombre de pas déterminés pour conférer à l'aiguille la position angulaire qu'il convient le long du cadran d'affichage.

Une nouvelle fois l'on précisera que si l'état de la technique qui est plus particulièrement décrit pour l'exposé du problème posé est celui des appareils d'affichage à aiguille, la présente invention n'est nullement limitée, dans la mesure où elle trouvera également une application pour d'autres appareils comme les dispositifs de commande des volets de circuit de climatisation pour véhicule automobile. Ainsi, l'invention trouvera un intérêt dès qu'il est nécessaire malgré un fonctionnement en boucle ouverte et, donc, en l'absence de capteurs, de connaître, très précisément, la position d'une charge entraînée par un moteur pas à pas, en particulier au travers d'un réducteur.

En fin de compte, il convient de procéder à cette réinitialisation du système d'affichage à chaque mise en marche, ce qui revient à dire qu'à chaque mise sous-tension l'on vient rechercher la position de référence.

A ce propos, le document EP-A-0.551.562 décrit une méthode de calage d'un moteur électrique polyphasé du type pas à pas ceci par rapport à une butée mécanique. Cette méthode part du principe que, sous l'influence de la rotation du rotor, comprenant N paires de pôles, il en résulte, dans les phases correspondant au bobinage du stator, une tension induite. Bien évidemment, en cas d'arrêt de rotation du rotor, cette tension induite s'annule.

Aussi, cette méthode antérieurement connue consiste, tout simplement, à détecter le passage à zéro de la tension induite dans au moins une des phases du moteur pour connaître la position de référence.

Ce type de méthode génère un certain nombre d'inconvénients. En particulier, dans le cas d'un système d'affichage, le rebond de l'aiguille ne pourra être évité et conduira à une erreur de position de celle-ci et donc à une mauvaise précision de l'affichage.

De plus, pour des questions de fiabilité de la méthode, il est courant d'alimenter le moteur dans un sens de rotation inverse à la butée mécanique avant de le faire changer de sens pour finalement détecter la présence de cette butée mécanique au travers de la mesure d'une tension induite égale à zéro. Dans le cas d'un afficheur ce déplacement de l'aiguille sans raison apparente pour l'utilisateur est à éviter.

Etant donné que l'on vient mesurer cette tension induite au niveau d'une phase du moteur au cours d'une séquence où ladite phase est non alimentée, il est impératif que ce passage à zéro de la tension induite soit surveillé sur chacune des phases du moteur si l'on souhaite détecter avec précision et au pas près la position de référence correspondant à ladite butée mécanique.

Bien évidemment, une telle position de référence pourrait être détectée par tout autre moyen, notamment par l'intermédiaire d'un capteur optique susceptible de détecter le passage de l'aiguille d'un volet ou similaire. De telles solutions sont cependant encombrantes et onéreuses.

La présente invention part du constat, dans une première démarche inventive, que la présence du système d'engrenage, de type réducteur au-delà duquel se situe nécessairement la butée mécanique, est à l'origine d'un certain laps de temps entre le moment où le dispositif rencontre cette butée mécanique et celui où intervient l'arrêt du moteur, ce régime transitoire résultant, notamment, du jeu mécanique et de l'élasticité que présente ce type de montage. Plus précisément, lorsque la roue de sortie de réducteur ou l'aiguille entraînée arrive en butée, les différentes roues et pignons de ce système d'engrenage viennent progressivement se bloquer les uns par rapport aux autres avec une certaine tension ce qui se traduit par une augmentation progressive de la charge du moteur, plus particulièrement, un ralentissement de ce dernier, d'où résulte une variation de la tension induite dans les phases de ce moteur entre la valeur de cette tension induite en fonctionnement stabilisé et zéro. Aussi, l'objet de la présente invention consiste en une méthode dont le principe est basé, précisément, dans la détection de cette variation de cette tension induite et/ou de son passage en deçà d'une valeur seuil, ceci dans des conditions bien déterminées, pour commander instantanément l'arrêt du moteur, soit avant même que cette tension induite soit égale à zéro.

En fin de compte, en arrêtant, au plus tôt, la séquence d'alimentation du moteur, bien avant que la tension induite passe par zéro, l'on vient éviter le blocage complet de l'engrenage d'où résulterait le rebond de l'aiguille ou du volet sur la butée mécanique et donc une erreur de positionnement.

Il convient de remarquer que dans la mesure où ce phénomène transitoire, résultant dans la transmission de l'effet de la butée mécanique sur le moteur par l'intermédiaire du système d'engrenage intervient que la charge soit loin de la position de référence ou qu'elle en soit très proche, il est possible, dans tous les cas, de détecter ce régime transitoire de la tension induite dans une phase du moteur et, par cet intermédiaire, la position de référence recherchée.

A cet effet, l'invention concerne une méthode de calage d'un moteur électrique par rapport à une position de référence correspondant à une butée mécanique répercutée au travers d'un système d'engrenage notamment un réducteur audit moteur électrique de type polyphasé à alimentation séquentielle pour un fonctionnement pas à pas, caractérisée par le fait qu'elle consiste, pendant une séquence de non alimentation d'au moins une des phases du moteur, à mesurer sur une fenêtre de temps déterminé, la tension induite dans la phase non alimentée et à comparer sa valeur moyenne à une valeur seuil, pour stopper l'alimentation dudit moteur sur la séquence en cours, si cette valeur moyenne mesurée est inférieure à ladite valeur seuil. A noter que la valeur seuil retenue sera choisie inférieure à la valeur moyenne atteinte normalement par cette tension induite à la vitesse qui est imposée à la charge commandée.

L'invention concerne encore une méthode de calage d'un moteur électrique par rapport à une position de référence correspondant à une butée mécanique répercutée, au travers d'un système d'engrenage, notamment un réducteur, audit moteur électrique de type polyphasé à alimentation séquentielle pour un fonctionnement pas à pas, caractérisée par le fait qu'elle consiste, pendant une séquence de non alimentation d'au moins une des phases du moteur, à relever sur une fenêtre de temps déterminée, la variation de la tension induite dans la phase non alimentée et à comparer cette variation par rapport à une variation standard pour stopper l'alimentation dudit moteur sur la séquence en cours en cas de décalage.

La présente invention sera mieux comprise à la lecture de la description qui va suivre accompagnée des dessins ci-joints se rapportant à des modes de réalisation donnés à titre d'exemples.

La figure 1 est une représentation schématisée du cadran d'un indicateur à aiguille avec butée mécanique située sur le cadran ;

La figure 2 est une représentation schématisée et en plan d'un exemple de réalisation d'un moteur à fonctionnement de type pas à pas venant entraîner une charge au travers d'un système d'engrenage sous forme d'un réducteur au niveau duquel est ménagée une butée mécanique ;

La figure 3 est la représentation graphique de l'évolution, dans le temps, de la tension induite dans une phase à l'arrivée d'une charge en particulier d'une aiguille sur une butée mécanique ;

La figure 4 est une représentation graphique de la mesure effectuée de la tension induite dans une phase lors d'une séquence d'alimentation nulle de cette dernière ;

Les figures 5 et 6 correspondent à des représentations graphiques similaires à la figure 4, mais sous forme schématisée, la figure 5 illustrant l'évolution, pendant une séquence de non alimentation, de la tension induite dans cette dernière, lorsque la butée mécanique n'est pas atteinte, la figure 6 illustrant cette évolution de cette tension induite dans les mêmes conditions, une fois la butée mécanique atteinte ;

La figure 7 correspond à l'évolution, dans le temps, de la tension induite dans une phase du moteur à fréquence d'alimentation très basse ;

La figure 8 illustre de manière schématisée un montage électronique pour la mise en oeuvre de la méthode selon l'invention.

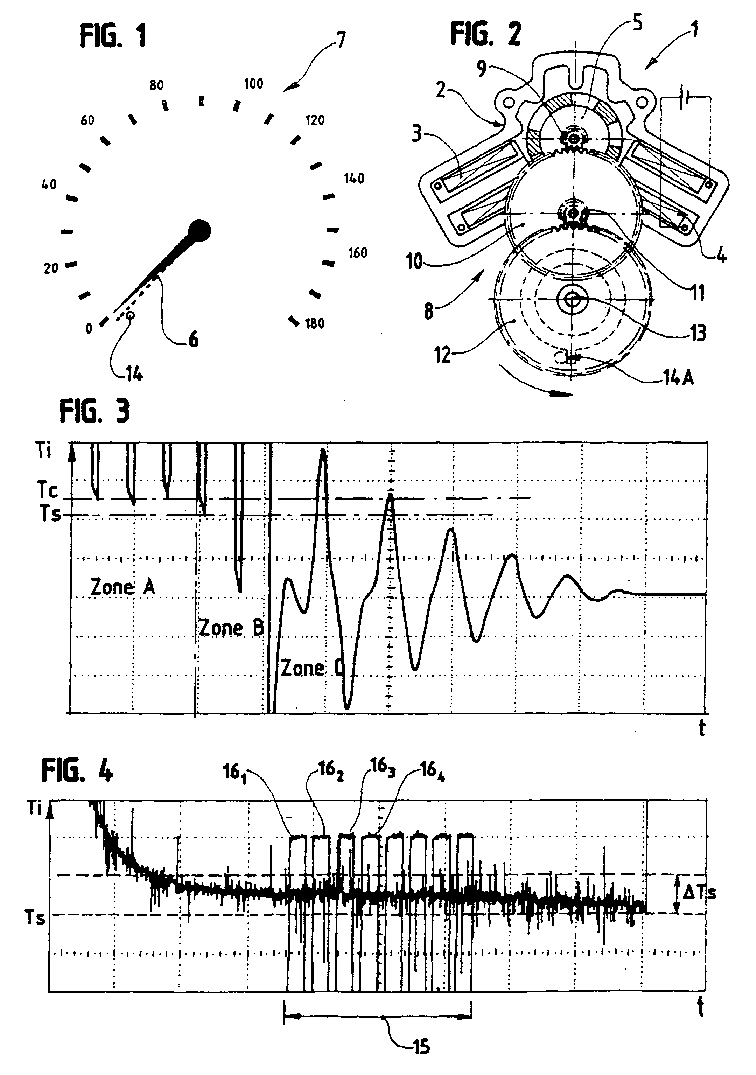

La présente invention s'attache, plus particulièrement, au domaine des moteurs électriques polyphasés dont un mode de réalisation est illustré dans la figure 2, un tel moteur étant alimenté de manière séquentielle pour un fonctionnement de type pas à pas connu. Tout particulièrement, le moteur 1 illustré à titre d'exemple dans cette figure 2 est de type diphasé et comporte une partie statorique équipée par deux bobines électriques 3, 4 et à l'intérieur de laquelle évolue un rotor 5 présentant N paires de pôles montés radialement, en sens alterné. Ici N est égal à 5.

Bien évidemment un tel moteur 1 peut être alimenté en mode pas entier ou demi-pas à la manière connue de l'homme du métier. L'on observera, toutefois, que cette dernière solution s'avère plus avantageuse dans la mesure où la charge ainsi entraînée adopte un mouvement sensiblement continu.

En ce qui concerne cette charge entraînée elle est constituée, dans un exemple d'application de ce moteur à un afficheur, par une aiguille 6 amenée à évoluer devant un cadran 7. Cette charge pourrait encore être constituée par un volet d'obturation dans le cadre d'une application au réglage du débit d'air d'un circuit de climatisation pour véhicule automobile par exemple.

Quoi qu'il en soit, cette charge, ici l'aiguille 6, est entraînée par le moteur 1 au travers d'un système d'engrenage 8 sous forme d'un réducteur. Ainsi, sur le rotor 5 est monté un pignon rotorique 9, lequel agit sur une roue intermédiaire 10 montée solidaire, axialement, d'un pignon intermédiaire 11, lui-même en prise avec une roue de sortie 12 sur l'axe 13 de laquelle est montée l'aiguille 6.

Précisément, dans ce type d'application à des afficheurs à aiguille ou à des commandes de volets d'obturation, ladite aiguille 6 ou un tel volet n'est amené à tourner que suivant une course inférieure à 360°, ce qui permet de faire appel à une butée mécanique 14, 14A, disposée, soit extérieurement au moteur 1, par exemple sur le cadran 7 de manière à coopérer avec l'aiguille 6 comme visible dans la figure 1, soit intérieurement à ce moteur 1 et dans ce cas cette butée mécanique 14A agit sur le système d'engrenage 8, plus particulièrement sur la roue de sortie 12 soumis à une rotation inférieure à 360°.

En fin de compte, la présente invention concerne une méthode de calage, par rapport à une position de référence définie par une telle butée mécanique 14, 14A, d'un moteur électrique polyphasé 1 à fonctionnement pas à pas tenant compte que l'action de la butée mécanique 14, 14A intervient au travers du système d'engrenage 8.

A ce propos, il a été illustré, dans la figure 3, le signal de la tension induite Ti mesurée dans une des phases du moteur 1, ceci lorsque l'aiguille 6 ou la roue de sortie 12 arrive contre ladite butée mécanique 14, 14A.

En particulier et comme on peut le voir dans la première partie, référencée zone A, de la représentation graphique, correspondant à un mode de fonctionnement stabilisé du moteur 1 et que l'on assimilera à une approche à vitesse élevée, cette tension induite Ti dans la dite phase prise en compte, mesurée lorsque cette dernière n'est pas alimentée, atteint une valeur Tc sensiblement constante.

Au-delà de la cette zone A, dans la zone B correspondant au cas où l'aiguille 6 ou le système d'engrenage 8 rencontre la butée mécanique 14, respectivement 14A, cette tension induite Ti ne s'annule pas brutalement, mais, au travers d'un régime transitoire, qui diminue progressivement pour, finalement, osciller dans la zone C qui correspond, comme cela se produit au travers des techniques connues, au rebondissement de l'aiguille 6 ou dudit système d'engrenage 8 sur ladite butée 14 ; 14A. Or, l'on recherche précisément à éviter ce phénomène.

Aussi, la méthode selon l'invention consiste, précisément, pendant une séquence de non alimentation d'au moins une phase du moteur 1 à mesurer, sur une fenêtre de temps 15 déterminée, la tension induite Ti dans ladite phase non alimentée et à comparer la valeur moyenne de celle-ci à une valeur seuil Ts pour stopper l'alimentation dudit moteur 1 sur la séquence en cours si ladite valeur moyenne mesurée Ti est inférieure à cette valeur seuil Ts.

A ce propos, cette valeur seuil Ts sera choisie inférieure à la valeur moyenne atteinte normalement par cette tension induite à la vitesse qui est imposée à la charge commandée.

La figure 4 illustre, sur une séquence de non alimentation de la phase sur laquelle s'effectue la mesure, la tension induite Ti dans cette phase. Est également visible la fenêtre 15 pendant laquelle interviennent plusieurs mesures 16, $16_1$, $16_2$, $16_3$, $16_4$ afin d'obtenir une moyenne que l'on vient ensuite comparer à une valeur Ts qui est la tension seuil prédéfinie.

L'on observera que dans la- mesure où l'on gère, dans le temps, les impulsions d'alimentation du moteur, il est facile de définir, très exactement, les fenêtres de mesure 15.

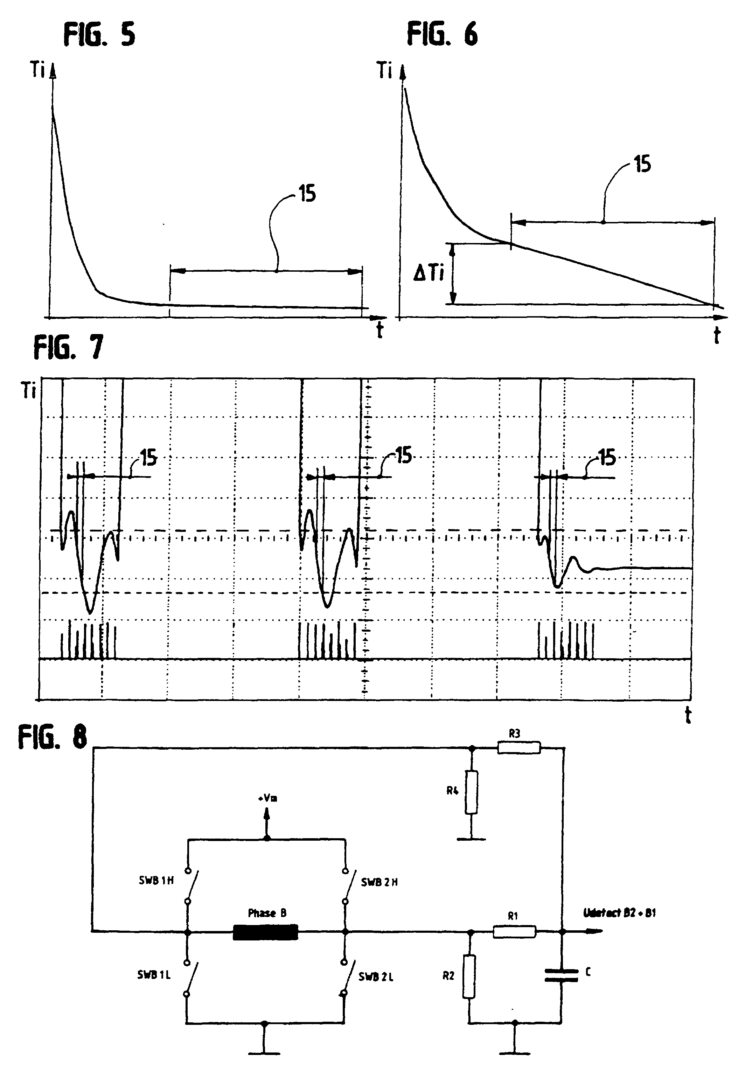

La figure 5 est une représentation très schématisée de la figure 4 et illustre, plus particulièrement, l'évolution de la tension induite Ti dans une phase du moteur 1 pendant une séquence de non alimentation de ladite phase, ceci lorsque la charge donc l'aiguille 6 ou encore le système d'engrenage 8 n'a pas atteint la butée mécanique 14, respectivement 14A. Comparativement, dans la figure 6 l'on voit l'évolution, dans les mêmes conditions, de cette tension induite Ti lorsque, au contraire, cette butée mécanique 14 ; 14A est atteinte. Il ressort que dans une fenêtre de mesure 15 sur une seule séquence de non alimentation de la phase surveillée, il est possible de détecter une variation ΔTi de la tension induite dans cette phase, variation qui traduit le fait que l'aiguille 6 ou le système d'engrenage est arrivé en butée mécanique 14, respectivement 14A. Ainsi la méthode de calage, selon l'invention, s'étend également à ce cas de figure où l'on ne va pas simplement mesurer une valeur de la tension induite Ti, mais relever une variation ΔTi de cette tension induite pour la comparer à une variation standard en régime stabilisé qui, lorsqu'elle est dépassée, génère l'arrêt de l'alimentation dudit moteur 1 sur la séquence en cours.

Si les graphiques illustrés dans les figures 4 à 6 correspondent à l'évolution de la tension induite dans une phase durant une séquence de non alimentation de cette dernière, ceci lorsque le moteur fonctionne à vitesse élevée, c'est à dire avec une fréquence d'alimentation élevée, la figure 7 illustre cette même évolution de la tension induite Ti dans une phase lorsque le moteur est alimenté avec une fréquence d'impulsion très basse.

Comme cela est visible, l'ondulation, définie par cette tension induite Ti dans la phase surveillée durant les séquences $S_1$ et $S_2$ de non alimentation de ladite phase, adopte une forme et une amplitude bien particulière. Toutefois, dans la séquence $S_3$ qui correspond à l'arrivée de l'aiguille 6 ou du système d'engrenage 8 sur la butée mécanique 14, respectivement 14A, cette ondulation vient à se modifier, de sorte que, même dans ce cas de figure, l'on peut détecter, sur une fenêtre de mesure 15 bien définie, une variation ΔTi de la tension induite qui, si elle est différente d'une variation standard ΔTis, génère l'arrêt de l'alimentation du moteur durant la séquence en cours.

La méthode fonctionne bien évidemment aussi lorsque dès le démarrage du système, l'aiguille 6 ou le système d'engrenage 8 est déjà sur la butée mécanique 14, respectivement 14A. En fait, dans ce cas, l'on vient mesurer, durant une séquence de non alimentation d'une phase, une tension induite dans cette dernière sensiblement égale à zéro, laquelle étant inférieure à la tension seuil Ts prédéfinie génère l'arrêt de fonctionnement du moteur sur ladite séquence.

L'on comprend, au vu de la description qui précède, que la méthode de calage utilisée peut correspondre à une combinaison de la détection du dépassement d'une valeur seuil Ts ou d'une variation de la tension induite ΔTi supérieure et/ou inférieure à une variation ΔTis prédéterminée.

Aussi, en vue de procéder au calage du moteur 1 par rapport à la position de référence correspondant à la butée mécanique 14 ; 14A lors de la mise sous tension du système, le moteur 1 est préférentiellement alimenté dans un premier temps en très basse fréquence en direction de la butée mécanique, ceci sur un nombre de pas réduit déterminé, au-delà desquels et si ladite butée mécanique n'a pas été détectée, l'on procède à une approche à grande vitesse. Plus précisément, le moteur 1 est alors alimenté à fréquence élevée jusqu'à rencontrer la butée mécanique 14; 14A.

Bien évidemment et comme par le passé, l'on peut encore envisager de ne recourir qu'à la solution d'approche à grande vitesse. Aussi, en phase d'initialisation et donc de détermination de la position de référence définie par la butée mécanique 14 ; 14A, le moteur 1 est tout d'abord alimenté sur plusieurs pas dans une direction opposée à cette butée mécanique 14 ; 14A avant d'être alimenté en sens contraire et à fréquence élevée pour une arrivée rapide sur ladite butée 14 ; 14A.

Il convient de remarquer que si les méthodes qui viennent d'être décrites consistent à surveiller la tension induite dans une seule phase du moteur lorsque ladite phase est non alimentée, l'on peut encore envisager, pour une plus grande précision, de surveiller l'évolution de la tension induite successivement dans chacune des phases lorsque celles-ci ne sont pas alimentées.

Toutefois, dans le cas particulier où la butée mécanique 14A est interne au moteur 1, en fait placée sur le système d'engrenage 8, il est possible de connaître, par construction, à quel pas du moteur correspond l'arrivée dudit système d'engrenage 8 sur cette butée mécanique 14A. Dans ces conditions l'on peut se contenter de surveiller la seule phase correspond à ce pas du moteur où entre en action ladite butée mécanique 14A.

La figure 2 illustre un système d'engrenage 8 calé mécaniquement par rapport à une butée mécanique 14A dans une position d'équilibre du rotor 5. En fait, la méthode de calage mécanique appliquée ici consiste à amener le rotor 5 dans une position d'équilibre en alimentant une de ses phases. Puis au travers de la pignonnerie intermédiaire on s'assure que la roue de sortie 12 est en coopération avec ladite butée mécanique 14A.

Plus particulièrement et selon l'invention, le nombre de dents du pignon rotorique 9 est choisi égal au nombre de pôles de l'aimant rotorique ou à un de ses multiples. Sur la figure 2 le nombre de dents du pignon rotorique 9 est égal au nombre de pâles de l'aimant, c'est à dire dix dans le moteur 1 tel qu'illustré.

Quant au nombre de dents de la roue intermédiaire 10 il correspond à un multiple du nombre de dents du pignon intermédiaire 11. Pour des problèmes d'usure, le nombre de ces dents de la roue intermédiaire 10 est toutefois choisi de préférence de telle manière qu'il ne correspond pas à un multiple du nombre de dents du pignon rotorique 9.

Dans l'exemple illustré, la roue intermédiaire 10 comporte soixante douze dents et le pignon intermédiaire 11 en comporte neuf.

On observera que, là encore pour des problèmes d'usure, le nombre de dents de la roue de sortie 12 ne correspond pas à un multiple du nombre de dents de pignons intermédiaires 11.

Ainsi et à titre d'exemple, ce nombre de dents de la roue de sortie est de soixante dix, on obtient ainsi un rapport de réduction:

$$\frac{72}{10} \times \frac{70}{9} = 56$$

L'avantage d'une telle construction ressort de la figure 2. En amenant la roue de sortie 12 contre la butée mécanique 14A de telle sorte que le creux entre deux dents successives se situe dans le même alignement passant par l'axe de cette roue de sortie 12 et l'axe du pignon rotorique 9 et en faisant coïncider, avec cet alignement une dent dudit pignon rotorique 9, l'on est assuré, au moment d'engager sur la roue de sortie 12 le pignon intermédiaire 11, que la roue intermédiaire 10, solidaire de ce pignon intermédiaire 11, est apte à coopérer au travers de sa denture avec le pignon rotororique 9, par ailleurs en position d'équilibre.

En effet, en retenant, en tant que nombre de dents du pignon rotorique 9, le nombre de pâles du rotor 5 ou l'un de ses multiples, le montage précédemment décrit s'avère possible quel que soit la position d'équilibre dans laquelle est amené ce rotor 5 au travers de l'alimentation d'une des phases du moteur 1.

Comme déjà indiqué plus haut, au travers d'un tel calage mécanique qui, d'un point de vue industriel, est facile à réaliser sans orientation angulaire prédéfinie de l'ensemble roue intermédiaire 10 - pignon intermédiaire 11, il est possible de connaître, très exactement, la phase correspondant à la position de référence du moteur 1 et, donc, la phase qu'il convient de surveiller au travers de la méthode expliquée plus haut.

Dans la mesure où il est à la portée de l'homme du métier de définir un montage électronique susceptible d'assurer la mise en oeuvre de la méthode de calage selon l'invention, il n'en a été représenté qu'un mode de réalisation à titre indicatif dans la figure 8 des dessins ci-joints.

## Revendications

**1.** Méthode de calage d'un moteur électrique (1) par rapport à une position de référence correspondant à une butée mécanique (14 ; 14A) répercutée au travers d'un système d'engrenage (8), notamment un réducteur, audit moteur électrique (1) de type polyphasé à alimentation séquentielle pour un fonctionnement pas à pas, **caractérisée par le fait qu'**elle consiste, pendant une séquence de non alimentation d'au moins une des phases du moteur (1), à mesurer, sur une fenêtre de temps (15) déterminée, la tension induite Ti dans la phase non alimentée et à comparer sa valeur moyenne à une valeur seuil Ts pour stopper l'alimentation dudit moteur (1) sur la séquence en cours, si cette valeur moyenne mesurée est inférieure à ladite valeur seuil.

**2.** Méthode de calage d'un moteur électrique (1) par rapport à une position de référence correspondant à une butée mécanique (14 ; 14A) répercutée au travers d'un système d'engrenage (8), notamment un réducteur audit moteur électrique (1) de type polyphasé à alimentation séquentielle pour un fonctionnement pas à pas, **caractérisée par le fait qu'**elle consiste, pendant une séquence de non alimentation d'au moins une des phases du moteur (1), à relever, sur une fenêtre de temps (15) déterminée, la variation de la tension induite $\Delta$Ti dans la phase non alimentée et à comparer cette variation par rapport à une variation standard $\Delta$Ts pour stopper l'alimentation dudit moteur (1) sur la séquence en cours en cas de décalage.

**3.** Méthode selon les revendications 1 et 2, **caractérisée en ce qu'**elle consiste, pendant une séquence de non alimentation d'au moins une phase du moteur (1), à mesurer, sur une fenêtre de temps (15) déterminée, la tension induite Ti dans la phase non alimentée afin de comparer sa valeur moyenne à une valeur seuil Ts et à relever, dans cette même fenêtre de temps (15) déterminée, la variation $\Delta$Ti de cette tension induite pour la comparer à une variation standard $\Delta$Ts et, finalement, pour stopper l'alimentation dudit moteur (1) sur la séquence en cours si, selon le cas, la tension induite mesurée Ti est inférieure à une valeur seuil Ts ou si la variation $\Delta$Ti relevée est différente d'une variation $\Delta$Ts standard.

**4.** Méthode selon l'une quelconque des revendications précédentes, **caractérisée par le fait qu'**elle est mise en application dans le cadre d'une approche rapide de la butée mécanique (14 ; 14A) à fréquence d'alimentation élevée du moteur (1).

**5.** Méthode selon l'une des revendications 2 ou 3, **caractérisée par le fait qu'**elle est appliquée dans le cadre d'une approche lente de la butée (14; 14A) à fréquence d'alimentation basse du moteur (1).

**6.** Méthode selon l'une quelconque des revendications précédentes, **caractérisée par le fait que** l'on vient surveiller la tension induite Ti ou sa variation ΔTi successivement dans chacune des phases du moteur (1) durant les séquences de non alimentation de ces phases.

**7.** Méthode selon l'une quelconque des revendications précédentes, **caractérisée par le fait qu'**elle consiste à caler mécaniquement le système d'engrenage (8) par rapport à une butée mécanique (14A) interne au moteur (1) dans une position d'équilibre du rotor (5) pour déterminer, par construction, à quel pas du moteur (1) correspond l'arrivée dudit système d'engrenage (8) sur cette butée mécanique (14A) et pour surveiller la tension induite Ti et/ou la variation de cette tension induite ΔTi, préférentiellement dans la phase non alimentée du moteur au moins au cours de la séquence correspondant à ce pas.

**8.** Système d'engrenage, en particulier un réducteur, pour la mise en oeuvre de la méthode selon la revendication 7, comprenant un pignon rotorique (9) en prise avec une roue intermédiaire (10) montée solidaire axialement d'un pignon intermédiaire (11) en prise avec une roue de sortie (12) sur laquelle agit la butée mécanique (14A), **caractérisé par le fait que** :

- le nombre de dents rotorique (9) est choisi égal au nombre de pôles de l'aimant rotorique ou à un de ses multiples ;

- la roue intermédiaire (10) comporte un nombre de dents correspondant à un multiple du nombre de dents du pignon intermédiaire (11) tout en étant différent d'un multiple du nombre de dents du pignon rotorique (9) ;

- la roue de sortie (12) comporte un nombre de dents différent d'un multiple du nombre de dents du pignon intermédiaire (11) ;

- et la roue de sortie (12) coopère avec la butée mécanique (14A) lorsque, au travers du pignon intermédiaire (11), d'une part, et de la roue intermédiaire (10) d'autre part, le rotor (5) se trouve dans une position d'équilibre par rapport à l'alimentation d'une des phases du moteur (1).

**Claims**

**1.** Process for setting an electric motor (1) with respect to a reference position corresponding to a mechanical thrust (14 ; 14A), having a repercussion, through a gear system (8), namely a reducing gear, onto said electric multiphase motor (1) with sequential current supply for stepwise operation, **characterised in that** it consists, during a non-feed sequence of at least one phase of the motor (1), in measuring in a determined time window (15) the induced voltage Ti in the non-feed phase and in comparing its average value with a threshold value Ts, in order to stop the current supply to said motor (1) on the current sequence, if this measured average value is lower than said threshold value.

**2.** Process for setting an electric motor (1) with respect to a reference position corresponding to a mechanical thrust (14 ; 14A), having a repercussion, through a gear system (8), namely a reducing gear, onto said electric multiphase motor (1) with sequential current supply for stepwise operation, **characterised in that** it consists, during a non-feed sequence of at least one phase of the motor (1), in measuring in a determined time window (15) the change ΔTi in the induced voltage in the non-feed phase and in comparing this change with respect to a standard change ΔTs, in order to stop de current supply to said motor (1) on the current sequence in the event of an offset.

**3.** Process according to claims 1 and 2, **characterised in that** it consists, during a non-feed sequence of at least one phase of the motor (1), in measuring in a determined time window (15) the induced voltage Ti in the non-feed phase, in order to compare its average value with a threshold value Ts and in measuring in this same determined time window (15) the change ΔTi of this induced voltage, in order to compare it with a standard change ΔTs and, finally, to stop the current supply to said motor (1) on the current sequence, if, as the case may be, the measured induced voltage Ti is lower than a threshold value Ts or the measured change Δti differs from the standard change ΔTs.

**4.** Process according to any of the preceding claims, **characterised in that** it is implemented in the framework of a quick nearing of the mechanical thrust (14 ; 14A) at high supply frequency of the motor (1).

**5.** Process according to any of claims 2 or 3, **characterised in that** it is implemented in the framework of a slow nearing of the mechanical thrust (14 ; 14A) at low supply frequency of the motor (1).

**6.** Process according to any of the preceding claims, **characterised in that** the induced voltage Ti or its change ∆Ti is successively monitored in each of the phases of the motor (1) during the non-feed sequences of these phases.

**7.** Process according to any of the preceding claims, **characterised in that** it consists in mechanically setting the gear system (8) with respect to a mechanical thrust (14A) inside the motor (1) in a balanced position of the rotor (5), in order to determine, by construction, to which step of the motor (1) corresponds the arrival of said gear system (8) at this mechanical thrust (14A), and to monitor the induced voltage Ti and/or the change of this induced voltage ∆Ti, preferably in the non-feed phase of the motor, at least during the sequence corresponding to this step.

**8.** Gear system, in particular a reducing gear, for implementing the process according to claim 7, comprising a rotor pinion (9) engaged with an intermediate wheel (10) fitted axially integral with an intermediate pinion (11) engaged with an exit wheel (12) on which the mechanical thrust (14A) acts, **characterised in that** :

- the number of rotor teeth (9) is selected equal to the number of poles of the rotor magnet or to a multiple of same ;
- the intermediate wheel (10) includes a number of teeth corresponding to a multiple of the number of teeth of the intermediate pinion (11), while being different from a multiple of the number of teeth of the rotor pinion (9) ;
- the exit wheel (12) includes a number of teeth different from a multiple of the number of teeth of the intermediate pinion (11) ;
- and the exit wheel (12) co-operates with the mechanical thrust (14A) when, through the intermediate (11), on the one hand, and, through the intermediate wheel (10), on the other hand, the rotor (5) is in a balanced position with respect to the current supply of one of the phases of the motor (1).

**Patentansprüche**

**1.** Verfahren zur Festsetzung eines Elektromotors (1) hinsichtlich einer Bezugsposition entsprechend einem mechanischen Anschlag (14 ; 14A), rückwirkend durch ein Getriebesystem (8), insbesondere ein Untersetzungsgetriebe, auf den besagten elektrischen Mehrphasenmotor (1) mit Sequenzspeisung für ein schrittweises Funktionieren, **dadurch gekennzeichnet, daß** es darin besteht, während einer Sequenz der Nichtspeisung von wenigstens einer der Phasen des Motors (1), in einem bestimmten Zeitfenster (15) die induzierte Spannung Ti in der nicht gespeisten Phase zu messen und ihren durchschnittlichen Wert mit einem Schwellenwert Ts zu vergleichen, um die Speisung des besagten Motors (1) auf der laufenden Sequenz zu unterbrechen, wenn dieser gemessene durchschnittliche Wert kleiner ist als der besagte Schwellenwert.

**2.** Verfahren zur Festsetzung eines Elektromotors (1) hinsichtlich einer Bezugsposition, entsprechend einem mechanischen Anschlag (14 ; 14A), rückwirkend durch ein Getriebesystem (8), insbesondere ein Untersetzungsgetriebe, auf den elektrischen Mehrphasenmotor (1) mit Sequenzspeisung für ein schrittweises Funktionieren, **dadurch gekennzeichnet, daß** es darin besteht, während einer Sequenz der Nichtspeisung von wenigstens einer der Phasen des Motors (1), in einem bestimmten Zeitfenster (15) die Veränderung ∆Ti der in der nicht gespeisten Phase induzierten Spannung hervorzuheben und diese Veränderung hinsichtlich einer Standardveränderung ∆Ts zu vergleichen, um die Speisung des besagten Motors (1) auf der laufenden Sequenz im Fall einer Verschiebung zu unterbrechen.

**3.** Verfahren nach Ansprüchen 1 und 2, **dadurch gekennzeichnet, daß** es darin besteht, während einer Sequenz der Nichtspeisung von wenigstens einer Phase des Motors (1), in einem bestimmten Zeitfenster (15) die induzierte Spannung Ti in der nicht gespeisten Phase zu messen, um ihren durchschnittlichen Wert mit einem Schwellenwert Ts zu vergleichen und um in demselben bestimmten Zeitfenster (15) die Veränderung ∆Ti dieser induzierten Spannung hervorzuheben, um sie mit einer Standardveränderung ∆Ts zu vergleichen, und schließlich, um die Speisung des besagten Motors (1) auf der laufenden Sequenz zu unterbrechen, wenn je nach dem Fall, die gemessene induzierte Spannung Ti kleiner ist als ein Schwellenwert Ts oder die hervorgehobene Veränderung ∆ti sich von der Standardveränderung ∆Ts unterscheidet.

**4.** Verfahren nach irgendeinem der vorgehenden Ansprüche, **dadurch gekennzeichnet, daß** es im Rahmen einer Schnellannäherung des mechanischen Anschlags (14 ; 14A) mit einer hohen Speisefrequenz des Motors (1) angewendet wird.

**5.** Verfahren nach irgendeinem der Ansprüche 2 oder 3, **dadurch gekennzeichnet, daß** es im Rahmen einer langsamen Annäherung des Anschlags (14 ; 14A) mit einer kleinen Speisefrequenz des Motors (1) angewendet wird.

**6.** Verfahren nach irgendeinem der vorgehenden Ansprüche, **dadurch gekennzeichnet, daß** die induzierte Spannung Ti oder ihre Veränderung ∆Ti aufeinanderfolgend in jeder der Phasen des Motors (1) während der Sequenzen von Nichtspeisung dieser Phasen überwacht wird.

7. Verfahren nach irgendeinem der vorgehenden Ansprüche, **dadurch gekennzeichnet, daß** es darin besteht, das Getriebesystem (8) hinsichtlich eines mechanischen Anschlags (14A) innerlich am Motor (1) in einer Position des Gleichgewichts des Rotors (5) mechanisch festzusetzen, um durch die Konstruktion zu bestimmen, welchem Schritt des Motors (1) die Ankunft des besagten Getriebesystems (8) an diesen mechanischen Anschlag (14A) entspricht, und um die induzierte Spannung Ti und/oder die Veränderung ∆Ti dieser induzierten Spannung, vorzugsweise in der nicht gespeisten Phase des Motors, wenigstens im Laufe der Sequenz, die diesem Schritt entspricht, zu überwachen.

8. Getriebesystem, insbesondere ein Untersetzungsgetriebe, für die Anwendung des Verfahrens nach Anspruch 7, umfassend ein Rotorzahnrad (9) im Griff mit einem Zwischenrad (10), das axial fest verbunden ist mit einem Zwischenzahnrad (11) im Griff mit einem Auslaufsrad (12), auf das der mechanische Anschlag (14A) wirkt, **dadurch gekennzeichnet, daß**:

- die Anzahl der Rotorzähne (9) gleich der Anzahl der Pole des Rotormagneten oder einer ihrer Vielfachen gewählt ist;
- das Zwischenrad (10) eine Anzahl von Zähnen umfaßt, entsprechend einer Vielfachen der Anzahl der Zähne des Zwischenzahnrades (11), seiend aber unterschiedlich von einer Vielfachen der Anzahl der Zähne des Rotorzahnrades (9) ;
- das Auslaufsrad (12) eine Anzahl von Zähnen umfaßt, die sich von einer Vielfachen der Anzahl der Zähne des Zwischenzahnrades (11) unterscheidet;
- und das Auslaufsrad (12) mit dem mechanischen Anschlag (14A) zusammenwirkt, wenn sich der Rotor (5) durch das Zwischenzahnrad (11), einerseits, und, durch das Zwischenrad (10), andererseits, in einer Gleichgewichtsposition hinsichtlich der Speisung von einer der Phasen des Motors (1) befindet.

**FIG. 1**

**FIG. 2**

**FIG. 3**

**FIG. 4**

# FIG. 5

# FIG. 6

# FIG. 7

# FIG. 8